# EUROPÄISCHE PATENTSCHRIFT

(11) **EP 2 094 466 B1**
(45) Veröffentlichungstag und Bekanntmachung des Hinweises auf die Patenterteilung: **25.05.2011**
(21) Anmeldenummer: 07856497.8
(22) Anmeldetag: 10.12.2007
(51) Int. Cl.: B29C 49/00, B65D 1/02, C08K 3/26, C08L 67/02, C08L 67/04, C08L 23/02

(54) **FORMULIERUNG, DARAUS HERGESTELLTER PREFORM UND VERFAHREN ZUR HERSTELLUNG STRECKGEBLASENER OPAKER KUNSTSTOFFBEHÄLTER**
FORMULATION, PREFORM PRODUCED THEREOF, AND METHOD FOR THE PRODUCTION OF STRETCH BLOW-MOLDED OPAQUE PLASTIC CONTAINERS
FORMULATION, FABRICATION DE PRÉFORME À PARTIR DE CELLE-CI ET PROCÉDÉ DE FABRICATION DE RÉCIPIENTS EN MATIÈRE PLASTIQUE OPAQUES FORMÉS PAR ÉTIRAGE-SOUFFLAGE

(30) Priorität: 21.12.2006 CH 20742006
(43) Veröffentlichungstag der Anmeldung: 02.09.2009
(73) Patentinhaber: Alpla-Werke Alwin Lehner GmbH und Co.KG, 6971 Hard (AT)
(72) Erfinder: SIEGL, Robert, 6850 Dornbirn (AT)
(74) Vertreter: Hasler, Erich
(86) Internationale Anmeldenummer: PCT/EP2007/010721
(87) Internationale Veröffentlichungsnummer: WO 2008/077468

(56) Entgegenhaltungen:
- EP-A- 0 309 620
- EP-A- 0 654 504
- EP-A- 1 110 991
- EP-A- 1 254 845
- EP-A2- 0 806 283
- WO-A-98/30459
- WO-A-2005/102865
- GB-A- 2 288 141
- JP-A- 56 034 432
- US-A- 3 203 921
- US-A- 5 523 135
- US-A- 5 547 723
- US-A- 6 001 439

## Beschreibung

Die Erfindung betrifft eine Formulierung zur Herstellung streckgeblasener opaker Kunststoffbehälter, insbesondere Kunststoffflaschen, gemäss dem Oberbegriff des Patentanspruchs 1. Die Erfindung betrifft auch einen daraus hergestellten, für das Streckblasverfahren geeigneten Preform sowie ein Streckblasverfahren.

Die in der Vergangenheit üblichen Behältnisse aus Weiss- oder Buntblech, aus Glas oder auch aus Keramik werden in zunehmendem Masse von Behältnissen aus Kunststoff abgelöst. Insbesondere für die Verpackung von schüttfähige Medien, beispielsweise von Reinigungsutensilien, Körperpflegemitteln, Kosmetika, Kfz-Medien, usw., kommen hauptsächlich Kunststoffbehältnisse zum Einsatz. Das geringe Gewicht und die geringeren Kosten spielen sicher eine nicht unerhebliche Rolle bei dieser Substitution. Die Verwendung rezyklierbarer Kunststoffmaterialien und die insgesamt günstigere Gesamtenergiebilanz bei ihrer Herstellung tragen auch dazu bei, die Akzeptanz von Kunststoffbehältnissen, insbesondere von Kunststoffflaschen, beim Konsumenten zu fördern.

Die am häufigsten eingesetzten Kunststoffflaschen bestehen im wesentlichen aus Polyethylenterephthalat (PET) und werden üblicherweise in einem sogenannten Streckblasverfahren hergestellt. PET wird wegen seines durch das Verstrecken beeinflussbaren Kristallisationsgrads und wegen seiner relativ niedrigen Materialkosten geschätzt. Dabei wird zunächst in einem Spritzgiessprozess in einer Spritzform ein PET-Preform hergestellt. Neuerdings sind auch Fliesspressverfahren zur Herstellung von Preforms vorgeschlagen worden. Der Preform weist einen im wesentlichen länglichen, zylindrischen Körper auf und ist an einem Längsende geschlossen ausgebildet. Ein Supportring trennt den Körper von einem Halsabschnitt mit einer Ausgiessöffnung. Der Halsabschnitt weist üblicherweise bereits die spätere Form des Flaschenhalses auf. An der Aussenseite des Halsabschnitts sind bereits Gewindeabschnitte oder dergleichen für die Festlegung eines Verschlussteils ausgebildet. Der Preform wird nach seiner Herstellung entformt und gleich weiterverarbeitet oder für eine spätere Verarbeitung auf einer Blasmaschine zwischengelagert. Vor der Weiterverarbeitung in einer Blasmaschine wird der Preform bei Bedarf konditioniert; danach wird er in eine Blasform einer Blasmaschine eingebracht. In der Blasform wird der Preform schliesslich durch ein mit Überdruck eingeblasenes Gas gemäss der Formkavität aufgeblasen und dabei zusätzlich mit einem Reckdorn verstreckt. Es ist auch bereits ein Streckblasverfahren bekannt, bei dem der Streck-/ Blasprozess direkt anschliessend an das Spritzen des Preforms erfolgt. Der Preform verbleibt dabei auf dem Spritzkern, der zugleich den Reckdorn bildet. Der Preform wird wiederum durch Überdruck gemäss der Formkavität einer Blasform, die auf den Spritzkern zugestellt wird oder umgekehrt, aufgeblasen und dabei vom Reckdorn verstreckt. Danach wird die fertige Kunststoffflasche entformt.

Für die Aufbewahrung von Nahrungsmitteln, die empfindlich gegenüber UV Strahlung und/oder sichtbarem Licht sind, kommen eingefärbte opake Kunststoffbehälter zum Einsatz. Diese sollen verhindern, dass das im Kunststoffbehälter aufbewahrte Nahrungsmittel, beispielsweise Milch, degradiert und seinen Geschmack verändert und/oder dass seine Inhaltsstoffe, wie z.B. Vitamin B oder C, durch die Strahlung abgebaut werden. Zu diesem Zweck ist beispielsweise in der WO 2005/102865 vorgeschlagen worden, einer Polyester-Matrix, insbesondere einer PET-Matrix, ein weisses Pigment aus der Gruppe bestehend aus Titanoxid und Zinksulfid beizumengen. Dabei ist vorgeschlagen, das Titanoxid bzw. Zinksulfid in einer Konzentration von 2% bis 40% bezogen auf das Gesamtgewicht der Kunstharzformulierung zuzugeben. Mit Titanoxid oder Zinksulfid vermengtes PET, das in einem Spritzstreckblasverfahren verarbeitet wird, führt im Allgemeinen zu opaken Kunststoffbehältern, die gute Rückhalteeigenschaften gegenüber UV Strahlung und sichtbarem Licht aufweisen. Der hohe Anteil dieser Pigmente erhöht jedoch die Materialkosten nicht unbeträchtlich. Wegen der relativ hohen Dichten der in hohen Konzentrationen zugegebenen Pigmente weisen die daraus hergestellten PET-Behälter in der Regel relativ dünne Wandstärken auf. Dies kann sich nachteilig auf die Biegesteifigkeit der Kunststoffbehälter auswirken. Titanoxid oder Zinksulfid weisen eine relativ hohe Härte auf. Dies kann bei der Verarbeitung von mit diesen Pigmenten in hohen Konzentrationen versetzten Materialien zu einem erhöhtem Verschleiss der Anlagen führen. Aus ökologischen Gründen werden Kunststoffbehälter neuerdings auch aus Biokunststoffen, beispielsweise aus Polylactid, hergestellt, die vollständig abbaubar sind. Der Einsatz von Titanoxid oder Zinksulfid in hohen Konzentrationen steht jedoch dem ökologischen Gedanken entgegen.

Aus der EP 0 806 283 A2 sowie aus der US 6,001,439 sind streckgeblasene, transparente Behälter aus Polyglycolsäure, einem Biopolymer, bekannt, wobei i.Z. mit deren Herstellung der Einsatz verschiedenster Zuschlagstoffe erwähnt wird. Das Patent US 5,523,135 beschreibt technische Kunststoffe und deren Verarbeitung z.B. zu Autoteilen mittels Blasformen oder Extrusion. Schliesslich ist aus der EP 0 654 504 A2 bekannt,, biologisch abbaubare Polymere, welche schwer zu verarbeiten sind bzw. im verarbeiteten Zustand besondere Nachteile aufweisen, mit Erdalkalikarbonaten zu versetzen, um die auftretenden Probleme zu überwinden.

Die erfindungsgemässe Formulierung zur Herstellung streckgeblasener opaker Kunststoffbehälter, insbesondere Kunststoffflaschen, umfasst eine für den Streckblasprozess einsetzbare Polymermatrix und wenigstens einen mineralischen Füllstoff. Die Polymermatrix ist aus der Gruppe bestehend aus PET, Polystyrol gewählt. Als mineralischer Füllstoff wird der Polymermatrix Kalziumkarbonat in einer Menge von 5% - 45% Gewicht bezogen auf das Gesamtgewicht der Formulierung beigemengt.

Aus der JP 56034432A ist die Herstellung eines blasgeformten Hohlkörpers aus Polyesterharz, dass bis zu 3 Gewichtsprozent Kalziumkarbonat enthalten kann, bekannt.

Die zu lösende Aufgabe besteht dabei in der Verringerung des Anhaftens des Hohlkörpers an die Werkzeugwand beim Blasformen.

Aufgabe der vorliegenden Erfindung ist es, ein Streckblasverfahren zur Herstellung von opaken Kunststoffbehältern dahingehend zu modifizieren, dass opake Kunststoffbehälter geringerer Dichte als mit dem geschilderten Verfahren des Stands der Technik herstellbar sind. Dabei sollen die erzeugten Kunststoffbehälter gute Rückhalteeigenschaften gegenüber UV Strahlung und sichtbarem Licht aufweisen. Das für die Herstellung der opaken Kunststoffbehälter eingesetzte Material soll auf die gewohnte Art verarbeitbar sein und insgesamt eine kostengünstigere Herstellung der opaken Behälter ermöglichen. Der Verschleiss der Fertigungsanlagen soll möglichst gering gehalten werden.

Die Lösung dieser Aufgaben besteht in einer Formulierung zur Herstellung eines opaken Kunststoffbehälters, welche die im kennzeichnenden Abschnitt des Patentanspruchs 1 angeführten Schritte und Merkmale aufweist. Weiterbildungen und/oder vorteilhafte Ausführungsvarianten der Erfindung sind Gegenstand der abhängigen Patentansprüche. Dem der Aufgabenstellung entsprechenden allgemeinen Erfindungsgedanken folgend, werden auch Patentanspruch für einen aus der Formulierung hergestellten, für das Streckblasverfahren geeigneten Preform sowie für ein Streckblasverfahren präsentiert.

PET ist wohl der am häufigsten im Streckblasprozess eingesetzte Kunststoff. Seine Vorteile sind hinlänglich bekannt. Polystyrol ist ebenfalls ein für das Streckblasverfahren gut geeigneter Kunststoff. Insbesondere ist er ein bevorzugtes Material für die Herstellung geschäumter Behälter. Neuerdings kommen auch vermehrt Biokunststoffe, insbesondere Polylactid, zum Einsatz. Biokunststoffe zeichnen sich durch ihre biologische Abbaubarkeit aus, welche aus ökologischen Gründen-zunehmend angestrebt wird. Kalziumkarbonat ist eine sehr häufige Verbindung und kommt in der Natur in Kalzit und Aragonit, als Kalkstein, Kreide oder Marmor vor. Er ist auch in Dolomit und anderen Mineralien enthalten und tritt in unterschiedlichen Reinheitsgraden auf. Kalziumkarbonat findet sich in den Knochen von Tieren und Menschen, sowie in fast jedem Fluss- und Quellwasser. Die synthetische Herstellung von Kalziumkarbonat ist einfach und kostengünstig; beispielsweise fällt Kalziumkarbonat beim Zusammentreffen von Kalzium- und Karbonationen aus wässrigen Lösungen als weisser Niederschlag aus. Es weist eine deutliche geringere Dichte auf als Titanoxid oder Zinksulfid. Aus der Formulierung hergestellten Kunststoffbehälter weisen eine grössere Wandstärke und dadurch grössere Biegesteifigkeit auf, als Formulierungen mit vergleichbar hohen Konzentrationen an Titanoxid oder Zinksulfid. Wegen der geringeren Härte des Kalziumkarbonats werden die Anlagen bei der Verarbeitung der erfindungsgemässen Formulierung weniger beansprucht als bei Formulierungen, die Titanoxid oder Zinksulfid in hohen Konzentrationen enthalten. Die Verarbeitung von mit Kalziumkarbonat versetzten Formulierungen erfordert keinen zusätzlichen Aufwand. Durch die Zugabe von Kalziumkarbonat wird die Viskosität der Formulierung herabgesetzt, was sich vorteilhaft auf die Weiterverarbeitung auswirkt. So können die Spritzdrücke bei der Herstellung der Preforms und die Blasdrücke beim Streckblasprozess verringert werden. Die allgemeine Prozessführung beim Streckblasprozess kann auf gewohnte Art beibehalten werden. Gerade in Verbindung mit Biokunststoffen, als deren Vertreter Polylactid angeführt ist, erweist sich Kalziumkarbonat als mineralischer Füllstoff von Vorteil, um die vollständige Bioabbaubarkeit des Kunststoffes zu gewährleisten.

Eine im beanspruchten Umfang mit Kalziumkarbonat versetzte Polymermatrix besitzt je nach dem Reinheitsgrad des eingesetzten Kalziumkarbonates eine grauweisse bis graubräunliche Einfärbung auf. Auch ein daraus in einem Kunststoffspritz- oder Fliesspressverfahren hergestellte Preform besitzt die gleiche Einfärbung. Wird diese Preform dann jedoch während des Streckblasprozesses mit den üblichen Prozessparametem biaxial gereckt, erhält man einen Kunststoffbehälter, der einen sehr gleichmässig eingefärbten, opaken Körper aufweist. Die Farbe des Kunststoffbehälters geht in Richtung Elfenbein bis Weiss. Je nach der Konzentration des Kalziumkarbonats in der ursprünglichen Formulierung ist die Wandung des Kunststoffbehälters mehr oder weniger opak. Ein aus der Formulierung im Streckblasprozess hergestellter Kunststoffbehälter weist eine geringere Dichte auf als vergleichbare Behälter aus mit Titanoxid oder Zinksulfid versetzten Formulierungen. Die Kunststoffbehälter weisen gute Rückhalteeigenschaften gegenüber UV-Strahlung bzw. sichtbarem Licht auf. Kalziumkarbonat ist wegen seiner einfachen Herstellbarkeit ein sehr kostengünstiger Rohstoff, was sich insgesamt vorteilhaft auf die Herstellkosten pro Kunststoffbehälter auswirkt.

Für die Lagerung und für die Verarbeitung wird das Kalziumkarbonat in Partikelform vorgelegt. Um eine möglichst homogene Durchmischung des Kalziumkarbonats mit der Polymermatrix zu erreichen wird das Kalziumkarbonat in einer Partikelgrösse von 200 nm bis 100 µm zugemischt.

Das Kalziumkarbonat kann in verschiedenen Kristallformen vorgelegt werden. Vorzugsweise wird es in Form von gemahlenem Kalzit, Aragonit oder in Form von Kreide der Polymermatrix beigemengt.

Eine alternative Formulierung wird durch Abmischen der Polymermatrix mit einer Masterbatch-Zubereitung hergestellt, die bis zu 85 Gewichtsprozent Kalziumkarbonat enthält. Die Masterbatch-Zubereitung liegt bereits in flüssiger bzw. gelartiger Form vor. Dies erleichtert die homogene Vermischung mit der Polymermatrix.

Um eine besonders gute und homogene Vermischung der Polymermatrix mit der Masterbatch-Zubereitung zu erreichen, erweist es sich von Vorteil, wenn die Masterbatch-Zubereitung bereits eine Polymermatrix aus der Gruppe bestehend aus Polyolefinen, Polyestern, insbesondere PET, Polystyrol und Biokunststoffen, insbesondere Polylactid, umfasst.

Die Formulierung aus der Polymermatrix und dem Kalziumkarbonat weist je nach der Qualität und dem Reinheitsgrad des eingesetzten Kalziumkarbonats eine mehr oder weniger gräuliche bis graubräunliche Farbe auf. Um auch Kalziumkarbonate geringerer Reinheitsgrade verarbeiten zu können, erweist es sich von Vorteil, wenn der Formulierung zusätzlich zum Kalziumkarbonat Titanoxid und/oder Zinksulfid in einer Konzentration von 0,5 % - 2% Gewicht bezogen auf das Gesamtgewicht der Formulierung beigemengt wird. Diese Pigmente haben einen stark färbenden Effekt und sorgen dafür, dass der Kunststoffbehälter vollständig weiss eingefärbt ist.

Die erfindungsgemässe Formulierung wird in gewohnter Art zu einem Preform für die Verwendung in einem Streckblasverfahren verarbeitet. Der derart hergestellte Preform weist einen länglichen, meist rotationssymmetrischen Körper auf, dessen eines Ende mit einem üblicherweise bombierten Boden verschlossen ist. Am gegenüberliegenden Längsende weist der Preform einen Halsabschnitt auf, an dessen Aussenwandung meist bereits Gewindeabschnitte oder dergleichen ausgebildet sind. Der Halsabschnitt und der Körper des Preforms sind üblicherweise durch einen flanschartig abragenden Transferring voneinander getrennt. Der Preform wird in gewohnter Weise für die Herstellung eines opaken Kunststoffbehälters in einem Streckblasprozess eingesetzt.

Um irgendwelche Wechselwirkungen der mit dem Kalziumkarbonat versehenen Wandung des aus dem Preform hergestellten Kunststoffbehälters mit dem Füllgut zu vermeiden kann die Innenwandung des Preforms mit einer Sperrschicht versehen sein. Beispielsweise besteht die Sperrschicht aus DLC (diamond-like-coating) oder einer glasähnlichen Beschichtung aus SiOₓ (glass-like-coating). Die Sperrschicht wird vorzugsweise in einem Plasma-Beschichtungsverfahren aufgetragen. Anstatt bereits den Preform mit der Sperrschicht zu versehen, kann auch erst der aus dem Preform hergestellte Kunststoffbehälter, vorzugsweise in einem Plasmabeschichtungsverfahren an seiner Innenwandung mit einer Sperrschicht versehen werden.

Bei aus mehrschichtig aufgebauten Preforms hergestellten Kunststoffbehältern kann zur Vermeidung von irgendwelchen Wechselwirkungen der Kalziumkarbonat enthaltenden Schicht mit dem Füllgut diese Schicht in eine Mittelschicht eingespritzt sein. In diesem Fall bildet die Kalziumkarbonat enthaltende Schicht eine der nach aussen an eine innerste Schicht anschliessenden Schichten.

Ein aus der Formulierung hergestellter Preform wird auf die gewohnte Art in einem Streckblasverfahren zu einem Kunststoffbehälter weiter verarbeitet. Dabei wird der Preform im erforderlichen Umfang erwärmt, in eine Formkavität einer Blasform einer Streckblasanordnung eingebracht und durch ein mit Überdruck eingeblasenes Gas gemäss der Formkavität der Blasform aufgeblasen und dabei durch einen Reckdorn verstreckt. Der fertig aufgeblasene, biaxial gereckte opake Kunststoffbehälter wird schliesslich entformt.

Der aus dem Preform im Streckblasverfahren aufgeblasene und biaxial gereckte opake Kunststoffbehälter weist zum Preform ein Längenstreckverhältnis von 1,5 - 5 und ein Durchmesserstreckverhältnis von 1,5 - 5 auf.

Für die Aufbewahrung von Nahrungsmitteln, die gegenüber UV-Strahlung und sichtbarem Licht empfindlich sind, erweist es sich von Vorteil, wenn der opake Kunststoffbehälter für elektromagnetische Strahlung der Wellenlänge von 400 nm - 500 nm eine Transmission von 20% oder weniger aufweist. Derartige Kunststoffbehälter können beispielsweise für die Aufbewahrung von Frischmilch oder Joghurt, oder für die Langzeitaufbewahrung von UHT Milch eingesetzt werden, für welche die Hersteller relativ lange Äufbrauchsfristen vorsehen.

Die erfindungsgemässe Formulierung erlaubt die kostengünstige Herstellung von opaken Kunststoffbehältern in einem Streckblasprozess. Die Herstellung und die Weiterverarbeitung der aus der Formulierung hergestellten Preforms zu opaken Kunststoffbehältern erfordert keine spezielle Prozessführung. Die Kunststoffspritzanlagen und die Streckblasmaschinen können in der gewohnten Weise eingesetzt und betrieben werden und werden durch die erfindungsgemässe Formulierung sogar weniger stark beansprucht. Die aus der Formulierung hergestellten opaken Kunststoffbehälter weisen eine gute Biegesteifigkeit auf und können auf die gewohnte Weise gefüllt und für die Aufbewahrung von Nahrungsmitteln eingesetzt werden, die gegenüber UV-Strahlung und sichtbarem Licht empfindlich sind. Insbesondere in Verbindung mit abbaubaren Biokunststoffen erweist sich der Einsatz von Kalziumkarbonat als mineralischem Füllstoff als ökologisch sinnvoll, da Kalziumkarbonat als natürlich vorkommende Substanz keinen Fremdstoff darstellt, der dem ökologischen Aspekt zuwider läuft.

## Patentansprüche

1. Formulierung zur Herstellung streckgeblasener opaker Kunststoffbehälter, insbesondere Kunststoffflaschen, umfassend eine für den Streckblasprozess einsetzbare Polymermatrix und wenigstens einen mineralischen Füllstoff, **dadurch gekennzeichnet, dass** die Polymermatrix aus der Gruppe bestehend aus PET, Polystyrol gewählt wird und der Polymermatrix als mineralischer Füllstoff Kalziumkarbonat in einer Menge von 5% - 45% Gewicht bezogen auf das Gesamtgewicht der Formulierung beigemengt ist.

2. Formulierung nach Anspruch 1, **dadurch gekennzeichnet, dass** das Kalziumkarbonat in Partikelform zugegeben wird und die Partikelgrösse 200 nm bis 100 µm beträgt.

3. Formulierung nach Anspruch 1 oder 2, **dadurch gekennzeichnet, dass** das Kalziumkarbonat in Form von Kalzit, Aragonit oder Kreide der Polymermatrix beigemengt ist.

4. Formulierung nach einem der vorangehenden Ansprüche, **dadurch gekennzeichnet, dass** sie durch Abmischen der Polymermatrix mit einer Masterbatch-Zubereitung, die bis zu 85 Gewichtsprozent Kalziumkarbonat enthält, hergestellt ist.

5. Formulierung nach Anspruch 4, **dadurch gekennzeichnet, dass** die Masterbatch-Zubereitung eine Polymermatrix aus der Gruppe bestehend aus PET, Polystyrol umfasst.

6. Formulierung nach einem der vorangehenden Ansprüche, **dadurch gekennzeichnet, dass** ihr Titanoxid und/oder Zinksulfid in einer Konzentration von 0,5 % - 2% Gewicht bezogen auf das Gesamtgewicht der Formulierung beigemengt ist.

7. Preform für die Verwendung in einem Streckblasverfahren zur Herstellung von opaken Kunststoffbehältern, hergestellt aus einer Formulierung gemäss einem der vorangehenden Ansprüche.

8. Preform nach Anspruch 7, **dadurch gekennzeichnet, dass** seine Innenwandung mit einer Sperrschicht versehen ist, die vorzugsweise in einem Plasma-Beschichtungsverfahren aufgetragen ist.

9. Preform nach Anspruch 8, **dadurch gekennzeichnet, dass** die Sperrschicht aus DLC (diamond-like-coating) oder SiOₓ (glass-like-coating) besteht.

10. Preform nach Anspruch 7, **dadurch gekennzeichnet, dass** er eine Innenschicht und eine oder mehrere nach aussen anschliessende Schichten aufweist und die Kalziumkarbonat enthaltende Schicht eine der nach aussen an die Innenschicht anschliessenden Schichten bildet.

11. Verfahren zur Herstellung streckgeblasener opaker Kunststoffbehälter, insbesondere Kunststoffflaschen aus einem Preform gemäss einem der Ansprüche 7 bis 10, bei dem der Preform erwärmt, in eine Formkavität einer Blasform einer Streckblasanordnung eingebracht und durch ein mit Überdruck eingeblasenes Gas gemäss der Formkavität der Blasform aufgeblasen und dabei durch einen Reckdorn verstreckt wird, und der fertig aufgeblasene Behälter entformt wird.

12. Verfahren nach Anspruch 11, **dadurch gekennzeichnet, dass** der Preform im Streckblasverfahren zu einem Behälter geblasen und gereckt wird, der zum Preform ein Längenstreckverhältnis von 1,5 - 5 und ein Durchmesserstreckverhältnis von 1,5 - 5 aufweist.

13. Opaker Kunststoffbehälter, insbesondere opake Kunststoffflasche, hergestellt nach einem Verfahren gemäss Anspruch 11 oder 12, **dadurch gekennzeichnet, dass** er für elektromagnetische Strahlung der Wellenlänge von 400 nm - 500 nm eine Transmission von 20% oder weniger aufweist.

14. Opaker Kunststoffbehälter nach Anspruch 13, **dadurch gekennzeichnet, dass** seine Innenwandung mit einer Sperrschicht versehen ist, die vorzugsweise in einem Plasma-Beschichtungsverfahren aufgetragen ist.

## Claims

1. Formulation for manufacturing stretched blown opaque plastic containers, in particular plastic bottles, comprising a polymer matrix usable for the stretch blow process and at least one mineral filler, **characterized in that** the polymer matrix is selected from the group of PET, polystyrene and that calcium carbonate is mixed as mineral filler to the polymer matrix in a quantity of 5% to 45% by weight related to the total weight of the formulation.

2. Formulation according to claim 1, **characterized in that** the calcium carbonate is added in particle form and that the particle size is from 200 nm to 100 µm.

3. Formulation according to claim 1 or 2, **characterized in that** the calcium carbonate is added in form of calcite, aragonite or chalk to the polymer matrix.

4. Formulation according to any of the preceding claims, **characterized in that** it is manufactured by mixing a master batch preparation which contains up to 85 percent by weight of calcium carbonate to the polymer matrix.

5. Formulation according to claim 4, **characterized in that** the master batch preparation comprises a polymer matrix from the group composed of PET, polystyrene.

6. Formulation according to any of the preceding claims, **characterized in that** titanium oxide and/or zinc sulphide is mixed thereto in a concentration of 0,5% to 2% percent by weight related to the total weight of the formulation.

7. Preform for the use in a stretch blow process for manufacturing opaque plastic containers, manufactured from a formulation according to any of the preceding claims.

8. Preform according to claim 7, **characterized in that** its inner wall is provided with a barrier layer which is preferably applied in a plasma coating process.

9. Preform according to claim 8, **characterized in that** the barrier layer is made of DLC (diamond-like-coating) or SiOₓ (glass-like-coating).

10. Preform according to claim 7, **characterized in that** it has an inner layer and one or several outwardly following layers and the calcium carbonate layer forms one of the layers which are outwardly following the inner layer.

11. Method for manufacturing stretched blown opaque plastic containers, in particular plastic bottles, from a preform according to any of the claims 7 to 10, for which the preform is heated, is brought into a mould cavity of a blow mould of a stretch blow moulding arrangement and is inflated by a gas blown with overpressure in compliance with the mould cavity of the blow mould by being stretched by a stretching mandrel and the ready stretched blown plastic bottle is demoulded.

12. Method according to claim 11, **characterized in that** the preform is blown and stretched in a stretch blow method to a container which has a length stretching ratio of 1,5 to 5 and a diameter stretching ratio of 1,5 to 5.

13. Opaque plastic container, in particular opaque plastic bottle, manufactured according to a method according claim 11 or 12, **characterized in that** it has a transmission of 20% or less for electromagnetic radiation of the wavelength of 400 nm to 500 nm.

14. Opaque plastic container according to claim 13, **characterized in that** its inner wall is provided with a barrier layer which is preferably applied in a plasma coating process.

## Revendications

1. Formulation pour la fabrication de récipients en matière plastique opaque soufflés étirés, en particulier de bouteilles en matière plastique, comprenant une matrice polymère qui peut être utilisée pour le processus de soufflage étirage et au moins un matériau de remplissage minéral, **caractérisée en ce que** la matrice polymère est sélectionnée dans le groupe composé du PET, du polystyrène et que du carbonate de calcium est mélangé en tant que matériau de remplissage minéral à la matrice polymère en une quantité de 5 % à 45 % en poids par rapport au poids total de la formulation.

2. Formulation selon la revendication 1, **caractérisée en ce que** le carbonate de calcium est ajouté sous forme de particules et que la grandeur des particules est de 200 nm à 100 µm.

3. Formulation selon la revendication 1 ou 2, **caractérisée en ce que** le carbonate de calcium est ajouté à la matrice polymère sous forme de calcite, d'aragonite ou de craie.

4. Formulation selon l'une des revendications précédentes, **caractérisée en ce qu'**elle est fabriquée en mélangeant la matrice polymère à une préparation de mélange-maître qui contient jusqu'à 85 pour-cent en poids de carbonate de calcium.

5. Formulation selon la revendication 4, **caractérisée en ce que** la préparation de mélange-maître comprend une matrice polymère du groupe composé du PET, du polystyrène.

6. Formulation selon l'une des revendications précédentes, **caractérisée en ce qu'**il lui est mélangé de l'oxyde de titane et/ou du sulfure de zinc dans une concentration de 0,5 % à 2 % en poids par rapport au poids total de la formulation.

7. Préforme pour l'utilisation dans un procédé de soufflage étirage pour la fabrication de récipients en matière plastique opaque, fabriquée à partir d'une formulation selon l'une des revendications précédentes.

8. Préforme selon la revendication 7, **caractérisée en ce que** sa paroi intérieure est pourvue d'une couche de barrage qui est appliquée, de préférence, dans un procédé d'enduction au plasma.

9. Préforme selon la revendication 8, **caractérisée en ce que** la couche de barrage est constituée par du DLC (diamond-like-coating) ou du SiOₓ (glass-like-coating).

10. Préforme selon la revendication 7, **caractérisée en ce qu'**elle présente une couche intérieure et une ou plusieurs couches suivantes vers l'extérieur et la couche qui contient du carbonate de calcium forme l'une des couches qui suivent la couche intérieure vers l'extérieur.

11. Procédé pour la fabrication de récipients en matière plastique opaque soufflés étirés, en particulier de bouteilles en matière plastique, à partir d'une préforme selon l'une des revendication 7 à 10, pour lequel la préforme est réchauffée, est mise en place dans une cavité de moulage d'un moule de soufflage d'un arrangement de soufflage étirage et est gonflée par un gaz insufflé avec surpression conformément à la cavité de moulage du moule de soufflage en étant étirée par un mandrin d'étirage et la bouteille en matière plastique soufflée étirée finie est démoulée.

12. Procédé selon la revendication 11, **caractérisé en ce que** le préforme est soufflée et étirée dans le procédé de soufflage étirage en un récipient qui présente, par rapport à la préforme, un rapport d'étirage de longueur d'1,5 à 5 et un rapport d'étirage de diamètre d'1,5 à 5.

13. Récipient en matière plastique opaque, en particulier plastique en matière plastique opaque, fabriqué selon un procédé selon la revendication 11 ou 12, **caractérisé en ce qu'**il présente une transmission de 20 % ou moins pour le rayonnement électromagnétique de la longueur d'ondes de 400 nm à 500 nm.

14. Récipient en matière plastique opaque selon la revendication 13, **caractérisé en ce que** sa paroi intérieure est pourvue d'une couche de barrage qui est appliquée, de préférence, dans un procédé d'enduction au plasma.
